# EUROPEAN PATENT APPLICATION

(11) **EP 4 516 156 A1**
(43) Date of publication of application: **05.03.2025**
(21) Application number: 24189275.1
(22) Date of filing: 17.07.2024
(51) Int. Cl.: A45C 11/00, G06F 1/16, H04M 1/18, A45B 11/00, A45C 15/00

(54) **A CASE FOR A PORTABLE COMPUTING DEVICE**

(30) Priority: 01.09.2023 NL 2035720
(71) Applicant: Fretz, Lucas Christiaan, 3818 BL Amersfoort (NL)
(72) Inventor: Fretz, Lucas Christiaan, 3818 BL Amersfoort (NL)
(74) Representative: De Vries & Metman

(57) **Abstract**

A case (1) for a portable computing device (2), such as a smartphone or tablet, comprises a housing (3) which has a front side (4) for receiving the portable computing device (2), a back side (5) opposite to the front side (4), first and second side rims (6, 7) extending opposite to each other, third and fourth side rims (8, 9) extending opposite to each other and between the first and second side rims (6, 7), and a flexible shade (13) for blocking sunlight. The housing (3) and the shade (13) are provided with first attaching members for releasably attaching the shade (13) to the back side (5) in a stored condition of the shade (13) and second attaching members for releasably attaching the shade (13) to at least the third side rim (8) in a shielding condition of the shade (13). In the shielding condition the shade (13) extends from the third side rim (8) in a direction away from the front side (4) and beyond opposite ends of the third side rim (8).

## Description

The present invention relates to a case for a portable computing device, such as a smartphone or tablet.

A portable computing device, such as a smartphone or tablet, has a digital display. When used in a brightly lit environment, such as outdoors on a sunny day, it can be difficult to see the contents of the display without shading the display. Shading the display with one's hand makes operating the portable computing device difficult.

An object of the invention is to provide a case including a shade for blocking sunlight.

This object is accomplished with the case according to the invention which comprises a housing which has a front side for receiving the portable computing device, a back side opposite to the front side, first and second side rims extending opposite to each other, third and fourth side rims extending opposite to each other and between the first and second side rims, and a flexible shade for blocking sunlight, wherein the housing and the shade are provided with first attaching members for releasably attaching the shade to the back side in a stored condition of the shade and second attaching members for releasably attaching the shade to at least the third side rim in a shielding condition of the shade, wherein in the shielding condition the shade extends from the third side rim in a direction away from the front side and beyond opposite ends of the third side rim.

An advantage of the case according to the invention is that the flexible shade is part of the case and can be detached from the housing in order to be attached to at least the third side rim. Due to the flexibility of the shade, portions of the shade which extend beyond the opposite ends of the third side rim can be hold against the first and second side rims of the housing by the user. The resulting shape of the shade in the shielding condition provides a curved shed at the front side of the housing which blocks sunlight onto a portable computing device when received at the front side. An additional advantage of the shade is that it provides privacy to the user when the portable computing device is used in a crowdy environment. The shade may be adapted such that in the shielding condition the shade can extend along the first, second and third side rims and leave the fourth side rim free.

In a preferred embodiment the second attaching members are also provided at the first and second side rims and the shade such that the shade is releasably attachable to the first, second and third side rims. In this embodiment the user is not required to hold the shade against the first and second side rims to form the curved shed.

In an embodiment the shade is formed by two separate shade parts which are stacked onto each other and releasably attached to each other and to the back side through the first attaching members in the stored condition and which are releasably attached to the at least third side rim in the shielding condition through the second attaching members, and preferably also to each other. In the shielding condition the separate shade parts can together form a relatively large common shade. The separate shade parts may have the same dimensions and or shapes. In the shielding condition the shade parts may partly overlap each other. in the latter case the second attaching members also attach the shade parts to each other. The shade parts may have a larger length than width, whereas in the shielding condition they may be aligned in their longitudinal directions.

The back side may be provided with a protruding edge which extends along the circumference of the housing hence creating a recess at the back side, wherein the shade parts are dimensioned such that they fit in the recess in the stored condition. This means that in the stored condition the shade parts can be stored in an appropriate way without protruding from the housing. The height of the protruding edge may be larger than the height of the stacked shade parts or flush therewith in the stored condition in order to protect the shade parts.

In a particular embodiment the separate shade parts comprise magnetic foils whereas the back side is provided with a magnetic material or a material that is attracted by the magnetic foils, thus forming the first attaching members, and/or wherein the second attaching members comprise a plurality of cooperating discrete magnets. The magnetic foils may have relatively low attracting force which is nevertheless sufficient to hold the shade parts at the back side because of their relatively large contact surfaces in the stored condition, whereas the cooperating discrete magnets may have relatively high attracting forces to keep the shade parts to the housing, and possibly to each other, in the shielding condition. In other words, the attracting forces per surface unit of the discrete magnets may be higher than of the magnetic foils. The back side of the housing may be provided with a sheet of magnetic material or a material that is attracted by the magnetic foils, which sheet may be fixed to the back side, for example by an adhesive. The discrete magnets may be flush-mounted to the at least third side rim and the shade parts.

In order to provide sufficient material to block sunlight the shade may have a folded condition and an unfolded condition, wherein the shade is in its folded condition in the stored condition and in its unfolded condition in the shielding condition. This means that the shade is stored in a compact way in the stored condition. In the folded condition the shade may extend in a flat plane. In the stored condition the shade may extend within the circumference of the back side, whereas in the unfolded condition the shade may have a length which is larger than the distance between the third and fourth side rims.

In a particular embodiment the housing is provided with two flaps, which are pivotable about respective pivot axes at the first and second side rims, such that in a folded condition thereof the flaps are folded to the back side of the housing. The flaps may be used for providing a user enhanced grip when the flaps are rotated such that they are directed away from the front side of the housing. Besides, in the shielding condition the shade may be sandwiched between fingers of a user and the flaps.

The flaps may be pivotable through respective living hinges. In that case the housing including the flaps may be manufactured as a single unit, for example by injection moulding of a plastic such as polypropylene.

It is noted that the housing may also be provided with the two flaps but without the shade, since the flaps as such provide an advantage, for example enhanced grip as explained hereinbefore.

The shade may cover the flaps in the stored condition in order to create a smooth back side of the case.

Each of the flaps may have a width which increases in a direction from the fourth side rim to the third side rim.

The flaps may be pivotable to a supporting condition in which the flaps are directed away from the back side of the housing so as to form supports of the housing when free ends of the flaps rest on a surface. If the widths of the respective flaps increase in a direction from the fourth side rim to the third side rim and the free ends of the flaps rest on a horizontal surface the front side of the housing will be inclined with respect to the horizontal surface. This may facilitate reading of content from the display of the portable computing device.

The flaps may be pivotable up to a holding condition in which the flaps are directed away from the front side so as to form holders for fingers of a user.

In the shielding condition the shade may extend along the flaps when they are in the holding condition, preferably at sides of the flaps which are directed away from each other. In the latter case, a user may press the shade against the flaps when holding the case.

The flaps and the shade may be provided with third attaching members for releasably attaching the shade to the flaps. This means that in the stored condition the shade can be attached to the flaps and/or in the shielding condition the shade can be attached to the flaps.

The housing may have a rectangular shape of which the first and second side rims are longer than the third and fourth side rims or vice versa. This is a typical shape of a smartphone or tablet which are accommodated by the case.

In an embodiment one of the shade and the back side comprises a magnetic material and the other one of the shade and the back side comprises a material which cooperates with the magnetic material so as to form the first attaching members.

In an embodiment one of the shade and the third side rim comprises a magnetic material and the other one of the shade and the third side rim comprises a material which cooperates with the magnetic material so as to form the second attaching members.

In an embodiment the shade comprises a magnetic material and the flaps, the back side and the third side rim comprise a material which cooperates with the magnetic material so as to form the first, second and third attaching members.

The second attaching members may also be provided at the fourth side rim and the shade such that the shade is releasably attachable to the fourth side rim. This means that the shade is also attachable to the first, third and fourth side rims or to the second, third and fourth side rims. For example, if the housing has a rectangular shape of which the first and second side rims are longer than the third and fourth side rims, the shade can be releasably attached to the housing when it is hold in landscape mode as well as it is hold in portrait mode. It is noted that in landscape mode the shade provides an advantage in terms of privacy, since a privacy screen filter usually functions when the portable computing device is held in portrait mode only.

The shade may be flexible such that in the shielding condition a smallest radius of the shade at a distance from the front side of the housing is larger than a smallest radius of a curve between the third side rim and each of the first and second side rims. This means that the shade may follow curves between the third side rim and each of the first and second side rims whereas at a distance from the front side of the housing the shade forms a relatively wide curve.

The invention will hereafter be elucidated with reference to very schematic drawings showing embodiments of the invention by way of example.
Fig. 1 is a perspective view of a part of an embodiment of a case for a portable computing device according to the invention.
Figs. 2-4 are similar views as Fig. 1, but showing different conditions of the case.
Fig. 5 is a top view of a shade of the case as shown in Figs. 1-4, showing an unfolded condition of the shade.
Fig. 6 is a similar view as Fig. 5, showing a folded condition of the shade.
Fig. 7 is a similar view as Fig. 1 in combination with the shade of Fig. 6, hence showing the embodiment of the case in a stored condition of the shade.
Fig. 8 is a rear view of the case as shown in Fig. 7.
Fig. 9 is a perspective view of the case of Fig. 7, showing a shielding condition of the shade.
Fig. 10 is a side view of the case as shown in Fig. 9.
Fig. 11 is a similar view as Fig. 7, but showing an alternative embodiment.
Figs. 12 and 13 are similar views as Figs. 9 and 10, respectively, but showing the alternative embodiment.
Fig. 14 is a similar view as Fig. 8, but showing the alternative embodiment.
Figs. 15 and 16 are similar views as Figs. 5 and 6, respectively, but showing the alternative embodiment.
Figs. 17 and 18 are similar views as Figs. 5 and 4, respectively, but showing another alternative embodiment.
Figs. 19 and 20 are similar views as Fig. 9, but showing a different application mode.
Fig. 21 is a similar view as Fig. 1, but showing another alternative embodiment.
Figs. 22-24 are similar views as Fig. 21, showing the alternative embodiment as seen from different sides.

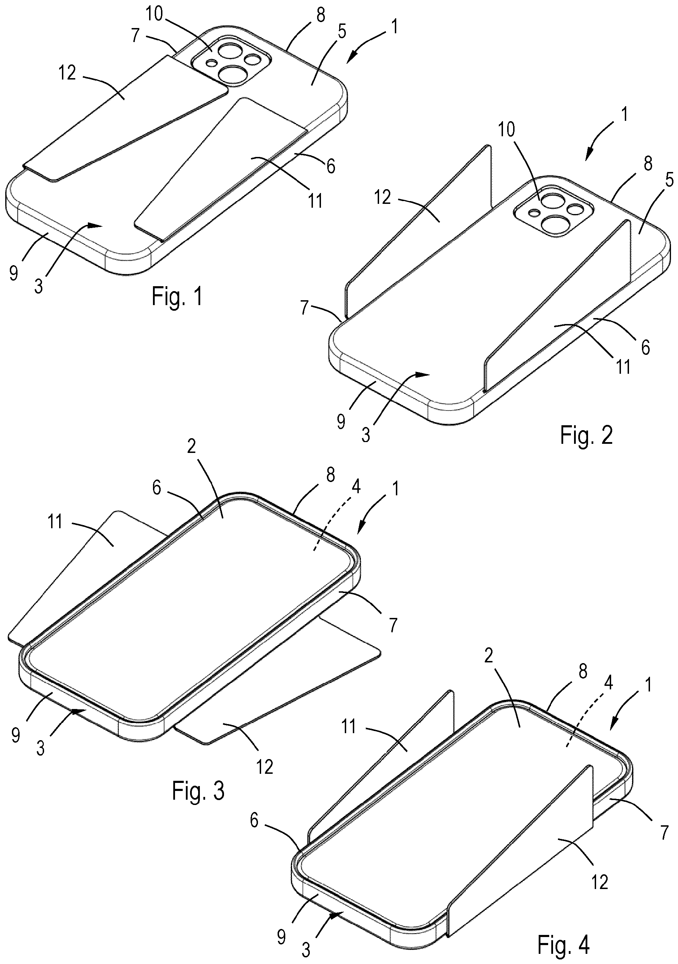

Figs. 1-4 show a part of an embodiment of a case 1 for a portable computing device 2 according to the invention. The shown portable computing device 2 is a smartphone, but an alternative device, such as a tablet, is also conceivable. The case 1 comprises a housing 3 which has a front side 4 for receiving the portable computing device 2 and a back side 5 opposite to the front side 4. The housing 3 is made of a plastic such as polypropylene, for example by means of injection moulding.

Furthermore, the housing 3 has a first side rim 6, a second side rim 7, a third side rim 8 and a fourth side rim 9. The first and second side rims 6, 7 extend parallel to each other and the third and fourth side rims 8, 9 extend parallel to each other. The third and fourth side rims 8, 9 extend between the first and second side rims 6, 7. The first and second side rims 6, 7 are longer than the third and fourth side rims 8, 9 such that the housing 3 has a rectangular shape. The housing 3 has a through-hole 10 between its front side 4 and its back side 5 for exposing a camera lens of the portable computing device 2. The first to fourth side rims 6-9 extend transversely to the front side 4 and surround a cavity which accommodates the portable computing device 2. The portable computing device 2 may be clamped between the first to fourth side rims 6-9.

The housing 3 is provided with two flaps 11, 12, which are pivotable with respect to the remainder of the housing 3 about respective pivot axes at the first and second side rims 6, 7, respectively. In the embodiment as shown in Figs. 1-4 the flaps 11, 12 are pivotable through living hinges, but alternative types of pivots are conceivable. Each of the flaps 11, 12 has a width which increases in a direction from the fourth side rim 9 to the third side rim 8. The pivot axes are located at a transfer region between the back side 5 and the first and second side rims 6, 7. This means that the flaps 11, 12 may be automatically blocked by the first and second side rims 6, 7 when being rotated to the condition as shown in Fig. 4.

Figs. 1-4 show four different positions of the flaps 11, 12. In the situation as shown in Fig. 1 the flaps 11, 12 are in a folded condition in which they are folded to the back side 5 of the housing 3. In the situation as shown in Fig. 2 the flaps 11, 12 are in a supporting condition in which they are directed away from the back side 5; in the supporting condition the flaps 11, 12 form supports of the housing 3 when free ends of the flaps 11, 12 rest on a horizontal surface. Since the widths of the flaps 11, 12 increase in a direction from the fourth side rim 9 to the third side rim 8, the third side rim 8 lies at a higher level than the fourth rim 9 when the free ends of the flaps 11, 12 rest on a surface. This may give a user an appropriate view on the portable computing device 2. In the situation as shown in Fig. 4 the flaps 11, 12 are in a holding condition in which the flaps 11, 12 are directed away from the front side 4. In the holding condition the flaps 11, 12 enable a user to hold the housing 3 firmly. Fig. 3 shows the flaps 11, 12 in an intermediate condition.

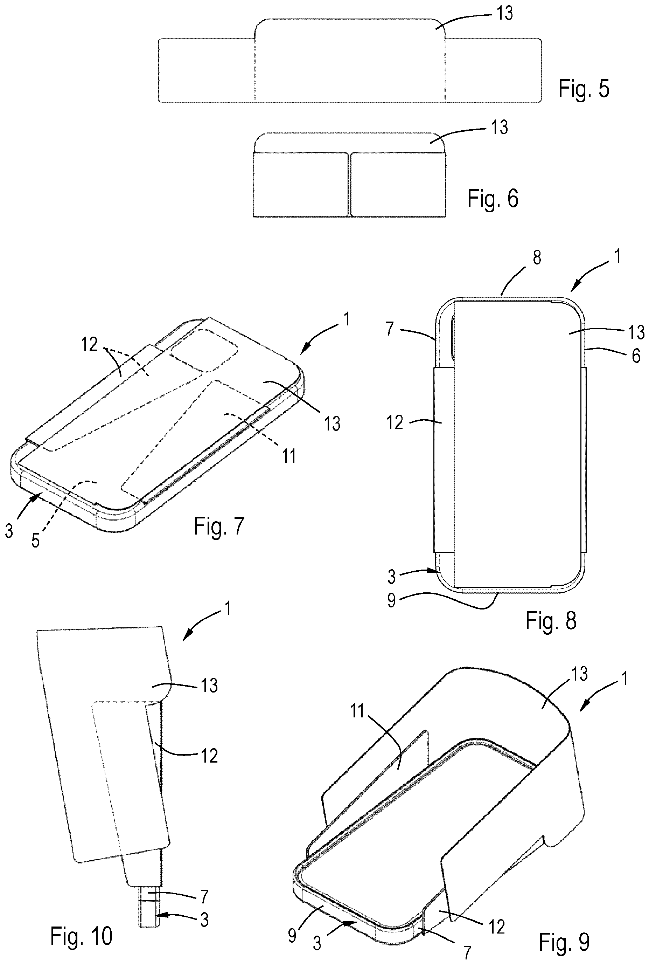

Figs. 5 and 6 show a flexible shade 13 when it is unfolded and folded, respectively. The shade 13 forms part of the case 1 and serves to block sunlight. Figs. 7 and 8 show a stored condition of the shade 13, which means that the shade 13 lies on the back side 5 of the housing 3 and the flaps 11, 12 when the flaps 11, 12 are in the folded condition. In the stored condition the shade 13 extends within the circumference of the back side 5. In the unfolded condition the shade 13 has a length which is larger than the distance between the third and fourth side rims 8, 9.

Figs. 9 and 10 show a shielding condition of the shade 13. In the shielding condition the shade 13 extends from the third side rim 8 in a direction away from the front side 4 and beyond opposite ends of the third side rim 8. It can be seen in Figs. 9 and 10 that beyond the opposite ends of the third side rim 8 a lower end portion of the shade 13 lies against the first and second side rims 6, 7 and opposite outer sides of the flaps 11, 12. In the shielding condition the shade 13 forms a curved shed, which blocks sunlight. This provides a user an appropriate view on the portable computing device 2. Additionally, the curved shed provides privacy when the portable computing device 2 is used in a crowdy environment.

The shade 13 is made of a material which is flexible such that in the shielding condition its lower end portion accurately follows curves of the housing 3 between the third side rim 8 and each of the first and second side rims 6, 7, whereas an upper end portion of the shade 13, i.e. at a distance from the front side 4, has a contour including less sharp curves. In other words, the shade 13 is flexible such that in the shielding condition a smallest radius of the shade 13 at a distance from the front side of the housing 3 is larger than a smallest radius of a curve between the third side rim 8 and each of the first and second side rims 6, 7.

In the embodiment as shown in Figs. 5-10 the shade 13 is made of a material including magnetic properties, whereas the flaps 11, 12 and the first, second and third side rims 6, 7, 8 are provided with a material that cooperates with the magnetic properties of the material of the shade 13. This enables a user to releasably attach the shade 13 to the housing 3. The back side 5 of the housing 3 is also provided with a material that cooperates with the magnetic properties of the material of the shade 13 such that the shade 13 can be releasably attached to the back side 5 and the flaps 11, 12 in order to obtain the stored condition as shown in Figs. 7 and 8. In this condition the shade 13 may also lock the flaps 11, 12 in the folded condition thereof such that they do not require separate locking means.

The magnetic material of the shade 13 and cooperating material in the flaps 11, 12 and the back side 5 of the housing 3 form first attaching members in the stored condition, whereas the magnetic material of the shade 13 and cooperating material in the flaps 11, 12 and the first, second and third side rims 6, 7, 8 of the housing 3 form second attaching members in the shielding condition. The magnetic material of the shade 13 and cooperating material in the flaps 11, 12 form third attaching members. It is noted that alternative first, second and third attaching members may be applied, for example Velcro strips or the like.

Figs. 9 and 10 illustrate that in the shielding condition the shade 13 extends along the flaps 11, 12 when they are in the holding condition, which provides the opportunity to sandwich the shade 13 between the flaps 11, 12 and fingers of a user. In an alternative embodiment (not shown) the flaps 11, 12 may be omitted such that in the shielding condition the shade 13 is attached to the first, second and third side rims 6, 7, 8 only. It is even possible to attach the shade 13 to the third side rim 8 only whereas the shade 13 is clamped against the first and second side rims 6, 7 by fingers of a user.

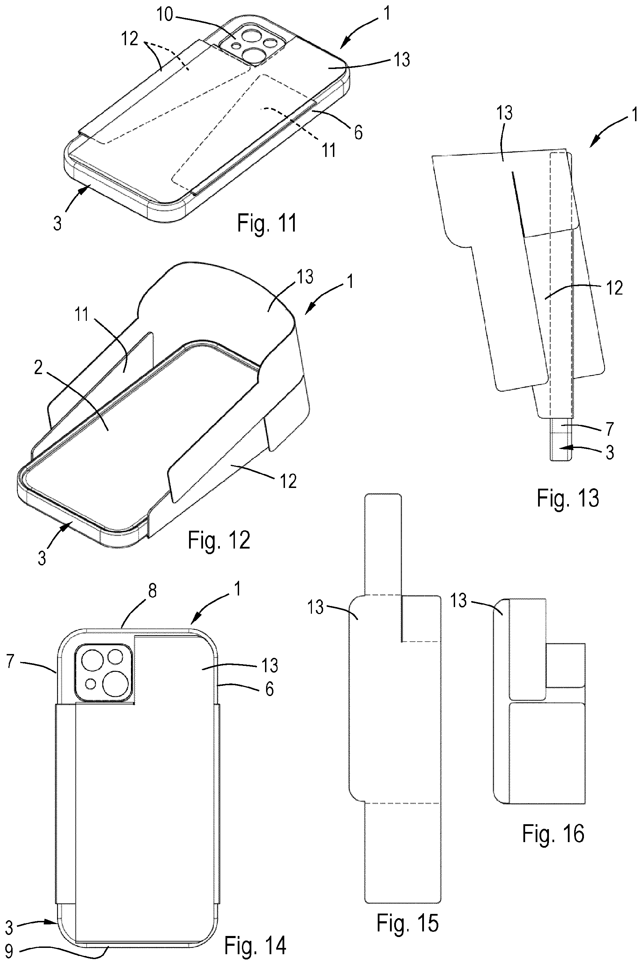

Figs. 11-16 show an alternative embodiment of the case 1, which distinguishes from the case 1 as shown in Figs. 1-10 in that the shade 13 is shaped such that in the stored condition the through-hole 10 is not covered by the shade 13. This keeps a camera lens of the portable computing device 2 free. Parts in the embodiment as shown in Figs. 11-16 which correspond to parts in the embodiment as shown in Figs. 1-10 have the same reference numbers. Figs. 15 and 16 show the shade 13 in its unfolded condition and folded condition, respectively.

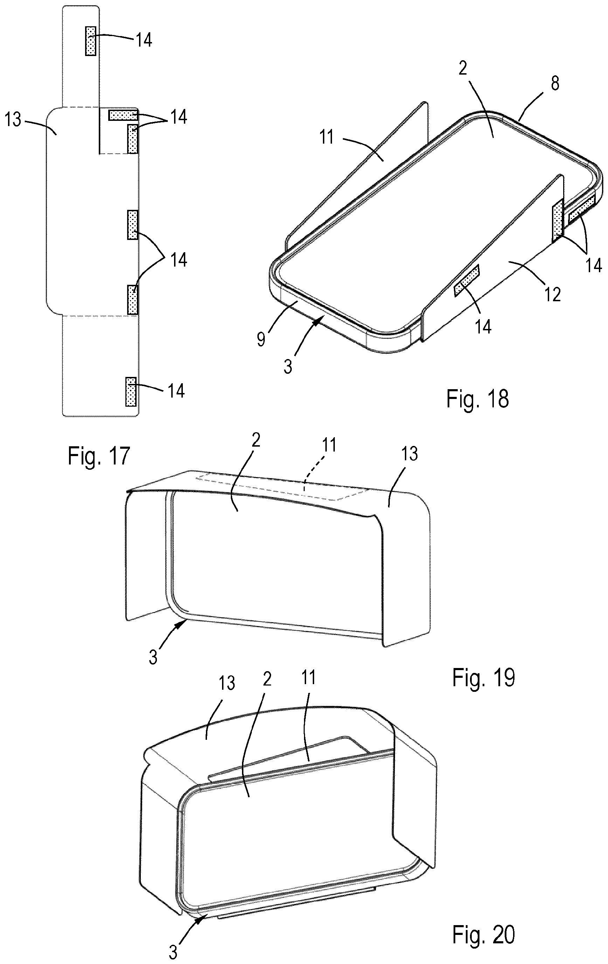

Figs. 17 and 18 show another alternative embodiment in which the shade 13, the flaps 11, 12 and the first, second and third side rims 6, 7, 8 are provided with first, second and third attaching members in the form of magnetic strips 14, which cooperate with each other to releasably attach the shade 12 to the housing 3.

Figs. 19 and 20 show another alternative embodiment, which has a lot of similarities to the embodiment as shown in Figs. 1-9, but in which the second attaching members are also provided at the fourth side rim 9 and the shade 13 such that the shade 13 is releasably attachable to the fourth side rim 9, as well. This provides the opportunity to mount the shade 13 to the housing 3 as shown in Figs. 19 and 20, i.e. when using the portable computing device 2 in a landscape mode. In this condition, one of the flaps 11 is directed away from the front side 4, whereas the other flap 12 is folded to the back side 5. Compared to a privacy screen filter which usually functions when the portable computing device 2 is held in portrait mode, the shade 13 is advantageous in terms of privacy when using the portable computing device 2 in a crowdy environment.

In a further embodiment (not shown) the case 1 may be provided with an additional flexible auxiliary shade which is attachable to the shade 13 in its shielding condition such that the auxiliary shade forms a higher shed on top of the front side 4 of the housing 3. The auxiliary shade may be made of the same material as the shade 13. It may also have an unfolded condition in the shielding condition of the shade 12 and a folded condition in the stored condition of the shade 13. The auxiliary shade and the shade 13 may lie on each other in the stored condition of the shade 13.

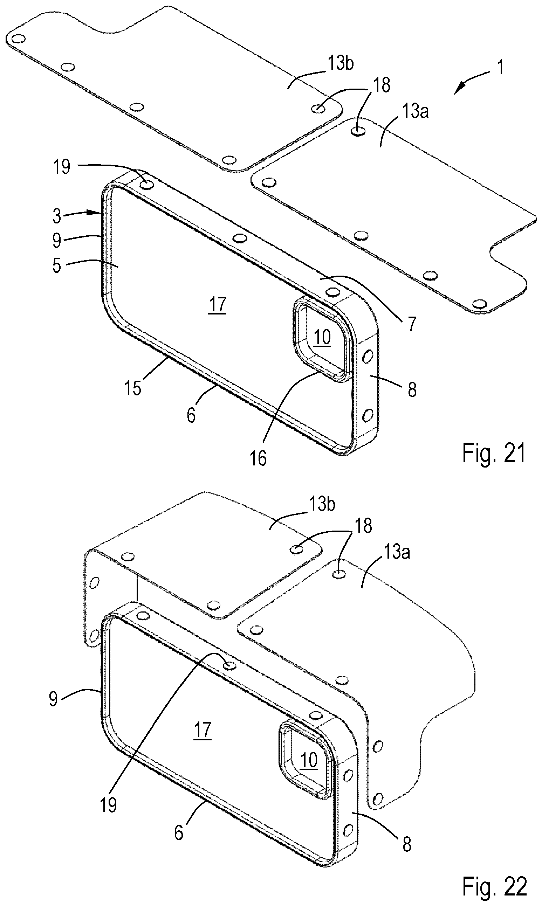

Figs. 21-24 show an alternative embodiment of the case 1. Parts corresponding to the embodiments as described hereinbefore have the same reference numbers. Figs. 21-24 show the housing 3 without the portable computing device 2. The case 1 comprises a shade in the form of two separate similar shade parts 13a, 13b which can be stacked onto each other and placed on the back side 5 in the stored condition. The shade parts 13a, 13b have the same shape and dimensions. The back side 5 of the housing 3 is provided with a first protruding edge 15 which extends along the circumference of the housing 3 and a second protruding edge 16 which extends around the through-hole 10. The first and second protruding edges 15, 16 form a recess 17 at the back side 5 of the housing 3. The shade parts 13a, 13b fit in the recess 17 in the stored condition such that when they are stacked onto each other in the recess 17 the first and second protruding edges 15, 16 are flush with an upper surface of the stacked shade parts 13a, 13b or protrude from an upper surface of the stacked shade parts 13a, 13b so as to protect the shade parts 13a, 13b in the stored condition. The shade parts 13a, 13b are shaped such that they do not cover the through-hole 10 in the stored condition.

The shade parts 13a, 13b are flexible sheets such that in the shielding condition a smallest radius of the shade parts 13a, 13b at a distance from the front side 4 of the housing 3 is larger than a smallest radius of a curve between each pair of adjacent first to fourth side rims 6-9, which is visible in Figs. 22-24. The shade parts 13a, 13b may comprise magnetic foils, which may have a thickness of 0.5 mm, for example. In that case the back side 5 of the housing 3 may be provided with a material to which the magnetic foils 13a, 13b are attracted. For example, a magnetic layer may be fixed to the back side 5 of the housing 3. In contrast to the embodiment as described hereinbefore the shade parts 13a, 13b are not folded in the stored condition.

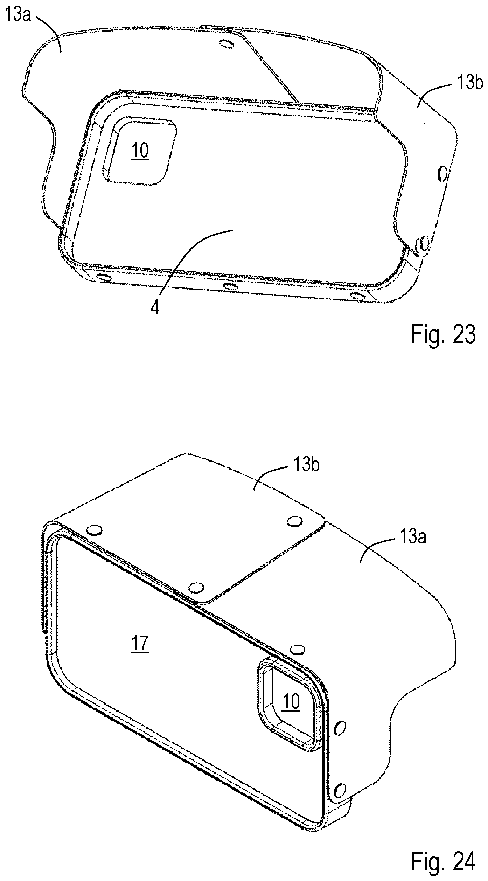

The shade parts 13a, 13b are provided with discrete shade part magnets 18 and the first to fourth side rims 6-9 of the housing 3 are provided with discrete housing magnets 19. The shade part magnets 18 and the housing magnets 19 are located such and cooperate with each other such that the shade parts 13a, 13b can be temporarily attached to each other and to the housing 3 in order to create the shielding condition as shown in Figs. 23-24. The figures show a situation in which in the shielding condition the shade parts 13a, 13b partly overlap each other and they are attached to the second, third and forth side rims 7, 8, 9, whereas leaving the first side rim 6 free. The shade part magnets 18 may be flush-mounted in the shade parts 13a, 13b and the housing magnets 19 may be flush-mounted in the first to fourth side rims 6-9.

The invention is not limited to the embodiments shown in the drawings and described hereinbefore, which may be varied in different manners within the scope of the claims and their technical equivalents. For example, the shape of the shade may be different.

## Claims

1. A case (1) for a portable computing device (2), such as a smartphone or tablet, comprising a housing (3) which has a front side (4) for receiving the portable computing device (2), a back side (5) opposite to the front side (4), first and second side rims (6, 7) extending opposite to each other, third and fourth side rims (8, 9) extending opposite to each other and between the first and second side rims (6, 7), and a flexible shade (13) for blocking sunlight, wherein the housing (3) and the shade (13) are provided with first attaching members for releasably attaching the shade (13) to the back side (5) in a stored condition of the shade (13) and second attaching members for releasably attaching the shade (13) to at least the third side rim (8) in a shielding condition of the shade (13), wherein in the shielding condition the shade (13) extends from the third side rim (8) in a direction away from the front side (4) and beyond opposite ends of the third side rim (8).

2. A case (1) according to claim 1, wherein the second attaching members are also provided at the first and second side rims (6, 7) and the shade (13) such that the shade (13) is releasably attachable to the first, second and third side rim (6, 7, 8).

3. A case (1) according to claim 1 or 2, wherein the shade (13) is formed by two separate shade parts (13a, 13b) which are stacked onto each other and releasably attached to each other and to the back side (5) through the first attaching members in the stored condition and which are releasably attached to the at least third side rim (3) in the shielding condition through the second attaching members, and preferably also to each other.

4. A case (1) according to claim 3, wherein the back side (5) is provided with a protruding edge (15) which extends along the circumference of the housing (3) hence creating a recess (17) at the back side (5), wherein the shade parts (13a, 13b) are dimensioned such that they fit in the recess (17) in the stored condition.

5. A case (1) according to claim 3 or 4, wherein the separate shade parts (13a, 13b) comprise magnetic foils whereas the back side (5) is provided with a magnetic material or a material that is attracted by the magnetic foils, thus forming the first attaching members, and/or wherein the second attaching members comprise a plurality of cooperating discrete magnets (18, 19).

6. A case (1) according to claim 1 or 2, wherein the shade (13) has a folded condition and an unfolded condition, wherein the shade (13) is in its folded condition in the stored condition and in its unfolded condition in the shielding condition.

7. A case (1) according to any one of the preceding claims, wherein the housing (3) is provided with two flaps (11, 12), which are pivotable about respective pivot axes at the first and second side rims (6, 7), such that in a folded condition thereof the flaps (11, 12) are folded to the back side (5) of the housing (3), wherein the shade (13) may cover the flaps (11, 12) in the stored condition and/or wherein each of the flaps (11, 12) may have a width which increases in a direction from the fourth side rim (9) to the third side rim (9) .

8. A case (1) according to claim 7, wherein the flaps (11, 12) are pivotable to a supporting condition in which the flaps (11, 12) are directed away from the back side (5) so as to form supports of the housing (3) when free ends of the flaps (11, 12) rest on a surface.

9. A case (1) according to claim 7 or 8, wherein the flaps (11, 12) are pivotable up to a holding condition in which the flaps (11, 12) are directed away from the front side (4) so as to form holders for fingers of a user, wherein in the shielding condition the shade (13) may extend along the flaps (11, 12) when they are in the holding condition, preferably at sides of the flaps (11, 12) which are directed away from each other.

10. A case (1) according to any one of the claims 7-9, wherein the flaps (11, 12) and the shade (13) are provided with third attaching members for releasably attaching the shade (13) to the flaps (11, 12).

11. A case (1) according to any one of the preceding claims, wherein one of the shade (13) and the back side (5) comprises a magnetic material and the other one of the shade (13) and the back side (5) comprises a material which cooperates with the magnetic material so as to form the first attaching members.

12. A case (1) according to any one of the preceding claims, wherein one of the shade (13) and the third side rim (8) comprises a magnetic material and the other one of the shade (13) and the third side rim (8) comprises a material which cooperates with the magnetic material so as to form the second attaching members.

13. A case (1) according to claim 10, 11 and 12,
wherein the shade (13) comprises a magnetic material and the flaps (11, 12), the back side (5) and the third side rim (8) comprise a material which cooperates with the magnetic material so as to form the first, second and third attaching members.

14. A case (1) according to any one of the preceding claims and claim 2, wherein the second attaching members are also provided at the fourth side rim (9) and the shade (13) such that the shade (13) is releasably attachable to the fourth side rim (9).

15. A case (1) according to any one of the preceding claims, wherein the shade (13) is flexible such that in the shielding condition a smallest radius of the shade (13) at a distance from the front side (4) of the housing (3) is larger than a smallest radius of a curve between the third side rim (8) and each of the first and second side rims (6, 7).
